# FASCICULE DE BREVET EUROPEEN

(11) **EP 3 894 186 B1**
(45) Date de publication et mention de la délivrance du brevet: **14.09.2022**
(21) Numéro de dépôt: 19842793.2
(22) Date de dépôt: 09.12.2019
(51) Int. Cl.: B29C 64/232, B29C 64/245, B29C 64/255, B33Y 30/00, B22F 12/00, B29C 64/153, B22F 10/20

(54) **MACHINE DE FABRICATION ADDITIVE AVEC UN ACTIONNEUR À AGENCEMENT COMPACT**
VORRICHTUNG ZUR GENERATIVEN FERTIGUNG MIT EINEM KOMPAKTEN AKTUATOR
ADDITIVE MANUFACTURING MACHINE HAVING A COMPACT ACTUATOR

(30) Priorité: 10.12.2018 FR 1872567
(43) Date de publication de la demande: 20.10.2021
(73) Titulaire: AddUp, 63118 Cébazat (FR)
(72) Inventeur: WALRAND, Gilles, 63118 Cebazat (FR); OLSOMMER, David, 63040 Clermont-Ferrand Cedex 9 (FR); EFFERNELLI, Albin, 63118 Cebazat (FR)
(74) Mandataire: Barascou, Frédéric
(86) Numéro de dépôt international: PCT/FR2019/052978
(87) Numéro de publication internationale: WO 2020/120888

(56) Documents cités:
- WO-A1-2018/007941
- WO-A1-2018/196106

## Description

La présente invention est relative à une machine de fabrication additive par dépôt de lit de poudre à agencement compact.

Plus précisément, l'invention concerne un agencement compact du ou des actionneurs permettant de déplacer un plateau sur lequel sont fabriquées des pièces par un procédé de fabrication additive par dépôt de lit de poudre.

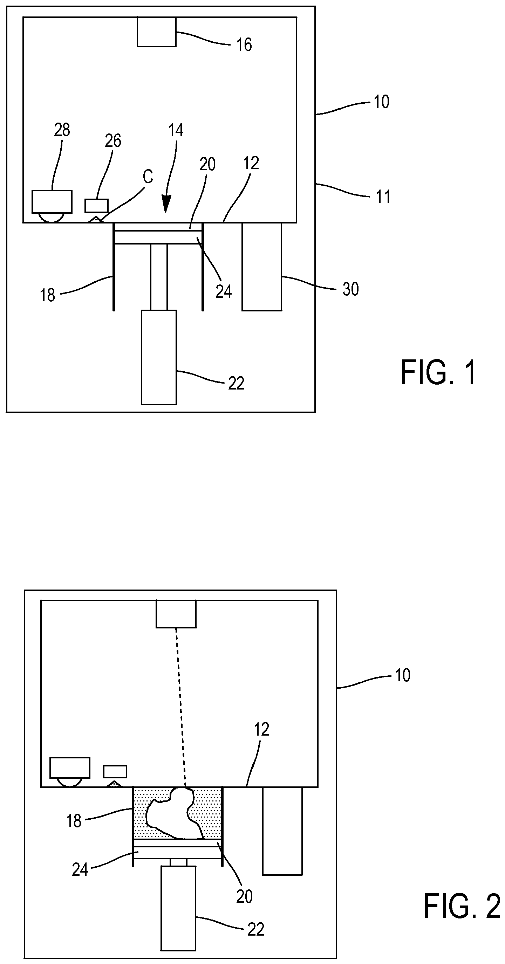

Les figures 1 et 2 représentent une machine de fabrication additive 10 par dépôt de lit de poudre connue de l'art antérieur. Cette machine de fabrication additive 10 comprend dans une enceinte de fabrication 11 un plan de travail 12 comprenant une zone de travail 14 permettant de recevoir une superposition de différentes couches de poudre, et un dispositif de consolidation sélective 16 des couches de poudre.

La zone de travail 14 est définie par une chemise de fabrication 18 et un plateau de fabrication 20. La chemise de fabrication 18 s'étend verticalement sous le plan de travail 12 et elle débouche dans le plan de travail. Le plateau de fabrication 20 coulisse verticalement à l'intérieur de la chemise de fabrication 18 sous l'effet d'un vérin 22. Le plateau de fabrication 20 est monté sur le vérin 22 via un support 24.

La machine de fabrication additive 10 comprend un dispositif de distribution de poudre 26 permettant de déposer un cordon de poudre C sur le plan de travail 12 et un dispositif d'étalement de poudre 28 permettant d'étaler le cordon de poudre C sur la zone de travail 14. La machine de fabrication additive 10 comprend aussi un réservoir 30 permettant de récupérer la poudre déposée en excès lors de la réalisation de chaque couche de poudre.

En début de fabrication, et comme l'illustre la figure 1, le vérin est totalement déployé et le plateau de fabrication 20 se situe dans le plan du plan de travail.

En fin de fabrication, et comme l'illustre la figure 2, le plateau de fabrication 20 se situe au fond de la chemise de fabrication 18 et le vérin est totalement rétracté.

Comme le montre la figure 2, la hauteur du plan de travail est déterminée par la somme de la hauteur de la chemise de fabrication et de la hauteur du vérin lorsqu'il est totalement rétracté.

Pour permettre au plateau de parcourir toute la hauteur de la chemise de fabrication, le vérin doit offrir une course au moins égale à la hauteur de la chemise de fabrication.

Par conséquent, l'encombrement en hauteur du vérin lorsqu'il est totalement rétracté est au moins égal à la hauteur de la chemise de fabrication, et le plan de travail doit se situer à une hauteur au moins égale à deux fois la hauteur de la chemise de fabrication.

Un entraînement en translation d'un plateau de fabrication par un vérin selon l'art antérieur présente des inconvénients.

D'une part, pour réduire la hauteur du plan de travail et l'encombrement global de la machine, il est nécessaire de réduire la hauteur de la chemise de fabrication et donc la hauteur des pièces fabriquées, ce qui va à l'encontre de l'amélioration des capacités de production de la machine de fabrication additive.

D'autre part, pour fabriquer des pièces de plus grande hauteur, il est nécessaire d'augmenter la hauteur de la chemise de fabrication et la course du vérin, et donc de surélever le plan de travail de la hauteur ajoutée à la chemise de fabrication et de la course ajoutée au vérin, ce qui va l'encontre de l'accessibilité du plan de travail et à l'encontre d'une réduction de l'encombrement global de la machine de fabrication additive.

Le document WO 2018/007941 propose un agencement permettant de fabriquer des pièces de grande hauteur en évitant une surélévation excessive du plan de travail de la machine. Selon cet agencement, des actionneurs situés à l'extérieur de la chemise de fabrication sont reliés au plateau de fabrication par des supports traversant les parois de la chemise via des fentes prévues à cet effet dans la hauteur de la chemise de fabrication. Au fur et à mesure de la descente du plateau, des bandes métalliques fixées au plateau de fabrication viennent obturer les fentes de la chemise de fabrication.

Par conséquent, avec l'agencement proposé dans le document WO 2018/007941, les bandes d'obturation dépassent de toute leur longueur au-dessus du plan de travail en début de fabrication, et elles continuent de dépasser au-dessus du plan de travail jusqu'à ce que le plateau arrive à sa position la plus basse dans la chemise.

En dépassant ainsi au-dessus du plan de travail, les bandes d'obturation prévues dans le document WO 2018/007941 perturbent l'écoulement des flux d'air utilisés pour évacuer les fumées issues de la consolidation sélective de la poudre par fusion, et ces bandes rendent plus complexe l'étalement des couches de poudre au-dessus du plateau de fabrication.

La présente invention a pour objectif de fournir une machine de fabrication additive par dépôt de lit de poudre dont l'agencement permet d'augmenter la hauteur de la chemise de fabrication, et donc des pièces fabriquées, sans surélever le plan de travail et sans augmenter l'encombrement global de la machine.

Alternativement, l'invention propose un agencement d'une machine de fabrication additive par dépôt de lit de poudre permettant de réduire la hauteur du plan de travail et donc l'encombrement global de la machine tout en conservant une chemise de fabrication de même hauteur, et donc les mêmes capacités de production de pièces, qu'une machine de l'art antérieur dont le plateau de fabrication est entraîné en translation par un vérin.

Avantageusement, l'invention permet d'atteindre les objectifs précités tout en évitant de perturber l'écoulement des flux d'air utilisés pour évacuer les fumées issues de la consolidation sélective de la poudre par fusion et en évitant de rendre plus complexe l'étalement des couches de poudre au-dessus du plateau de fabrication.

A cet effet, l'invention a pour objet une machine de fabrication additive par dépôt de lit de poudre, cette machine de fabrication additive comprenant un plan de travail, une chemise de fabrication s'étendant depuis le plan de travail et sous le plan de travail, et un plateau de fabrication se translatant entre une position haute et une position basse à l'intérieur de la chemise de fabrication sous l'effet d'un actionneur, le plateau étant relié à l'actionneur par un support, la chemise de fabrication comprenant une fente dans sa hauteur permettant au support de traverser la chemise de fabrication pour relier le plateau à l'actionneur lorsque le plateau de fabrication se translate de sa position haute à sa position basse dans la chemise de fabrication, un élément d'obturation permettant d'obturer une fente de la chemise au fur et à mesure de la translation du plateau de sa position haute vers sa position basse dans la chemise, un élément d'obturation étant un ruban.

Selon l'invention, l'extrémité supérieure d'un ruban d'obturation est fixée au bord supérieur de la chemise de fabrication ou au plan de travail.

Grâce à la fente de la chemise de fabrication, l'actionneur peut être disposé à côté de la chemise de fabrication et libérer l'espace sous la chemise de fabrication. L'espace ainsi libéré peut être utilisé pour réduire la hauteur du plan de travail, et donc l'encombrement global de la machine, ou pour augmenter la hauteur de la chemise de fabrication, et donc la hauteur des pièces fabriquées.

En fixant l'extrémité supérieure d'un ruban d'obturation au bord supérieur de la chemise de fabrication ou au plan de travail, on s'assure que cet élément d'obturation ne viendra perturber ni l'écoulement des flux d'air au-dessus du plan de travail de la machine, ni l'étalement des couches de poudre au-dessus du plateau de fabrication.

L'invention prévoit aussi que :
- l'extrémité inférieure d'un ruban d'obturation est reliée à un dispositif de mise en tension du ruban,
- un dispositif de mise en tension d'un ruban est disposé à l'intérieur de la chemise de fabrication et sous le plateau de fabrication,
- un dispositif de mise en tension d'un ruban comprend au moins un ressort reliant l'extrémité inférieure du ruban à une partie fixe de la machine et une lame ressort en appui sur le ruban,
- un support reliant le plateau à un actionneur comprend une butée en contre-appui sur le ruban, le contre-effort exercé par la butée d'un support sur un ruban s'opposant à l'effort de plaquage exercé par la lame ressort du dispositif de mise en tension sur ce ruban,
- un jeu fonctionnel est prévu entre le plateau et la chemise de fabrication pour le passage d'un ruban entre le plateau et la chemise de fabrication,
- un ruban prend la forme d'un feuillard métallique,
- un élément d'obturation comprend aussi une paroi de recouvrement fabriquée au fur et à mesure de la translation du plateau dans la chemise de fabrication,
- un actionneur entraînant le plateau en translation à l'intérieur de la chemise de fabrication est disposé à l'extérieur de la chemise de fabrication,
- un actionneur entraînant le plateau en translation à l'intérieur de la chemise de fabrication via un support, cet actionneur s'étend au-dessus de ce support lorsque le plateau est dans sa position basse dans la chemise de fabrication,
- un actionneur entraînant le plateau en translation à l'intérieur de la chemise de fabrication s'étend sous le plan de travail,
- un actionneur entraînant le plateau en translation à l'intérieur de la chemise de fabrication via un support, cet actionneur s'étend en-dessous de ce support lorsque le plateau est dans sa position haute dans la chemise de fabrication,
- un actionneur prend la forme d'un axe fileté et entraîné en rotation par un moteur, un support comprenant un écrou vissé sur l'axe fileté,
- le plateau de fabrication se translate entre sa position haute et sa position basse à l'intérieur de la chemise de fabrication sous l'effet de plusieurs actionneurs, le plateau étant relié à chaque actionneur par un support, et la chemise de fabrication comprend plusieurs fentes dans sa hauteur permettant à un support de traverser la chemise de fabrication pour relier le plateau de fabrication à chaque actionneur lorsque le plateau de fabrication se translate de sa position haute à sa position basse dans la chemise de fabrication,
- le plateau de fabrication se translate entre sa position haute et sa position basse à l'intérieur de la chemise de fabrication sous l'effet de trois actionneurs répartis régulièrement autour de la chemise de fabrication.

D'autres caractéristiques et avantages de l'invention apparaîtront dans la description qui va suivre. Cette description, donnée à titre d'exemple et non limitative, se réfère aux dessins joints en annexe sur lesquels :
- [Fig.1] est une vue schématique de face et en coupe d'une machine de fabrication additive par dépôt de lit de poudre de l'art antérieur avec son plateau de fabrication en position haute,
- [Fig.2] est une vue schématique de face et en coupe d'une machine de fabrication additive par dépôt de lit de poudre de l'art antérieur avec son plateau de fabrication en position basse,
- [Fig.3] est une vue schématique de face et en coupe d'une machine de fabrication additive par dépôt de lit de poudre selon l'invention avec son plateau de fabrication en position haute,
- [Fig.4] est une vue schématique de face et en coupe d'une machine de fabrication additive par dépôt de lit de poudre selon l'invention avec son plateau de fabrication en position basse,
- [Fig.5] est une vue schématique de face et en coupe d'une machine de fabrication additive par dépôt de lit de poudre selon l'invention avec un élément d'obturation prenant la forme d'un ruban et permettant d'obturer une fente d'une chemise de fabrication,
- [Fig.6] est une vue en perspective et en coupe d'une machine de fabrication additive par dépôt de lit de poudre selon l'invention avec un élément d'obturation prenant la forme d'un ruban et permettant d'obturer une fente d'une chemise de fabrication,
- [Fig.7] est une vue schématique de face et en coupe d'une machine de fabrication additive par dépôt de lit de poudre selon l'invention avec un élément d'obturation prenant la forme d'une paroi de recouvrement et permettant d'obturer une fente d'une chemise de fabrication,
- [Fig.8] est une vue en perspective d'une chemise de fabrication d'une machine de fabrication additive par dépôt de lit de poudre selon l'invention avec plusieurs fentes et plusieurs actionneurs.

L'invention est relative à une machine de fabrication additive par dépôt de lit de poudre. La fabrication additive par dépôt de lit de poudre est un procédé de fabrication additif dans lequel une ou plusieurs pièces sont fabriquées par la consolidation sélective de différentes couches de poudre de fabrication additive superposées les unes sur les autres. La consolidation est dite sélective car seules des zones des couches de poudre correspondant à des sections des pièces à fabriquer sont consolidées.

Par exemple, la ou les pièces sont fabriquées par la fusion sélective de différentes couches de poudre de fabrication additive superposées les unes sur les autres. La fusion peut être totale ou partielle (frittage). La fusion sélective peut être obtenue à l'aide d'un faisceau laser (Selective Laser Melting) et/ou d'un faisceau d'électrons (Electron Beam Melting).

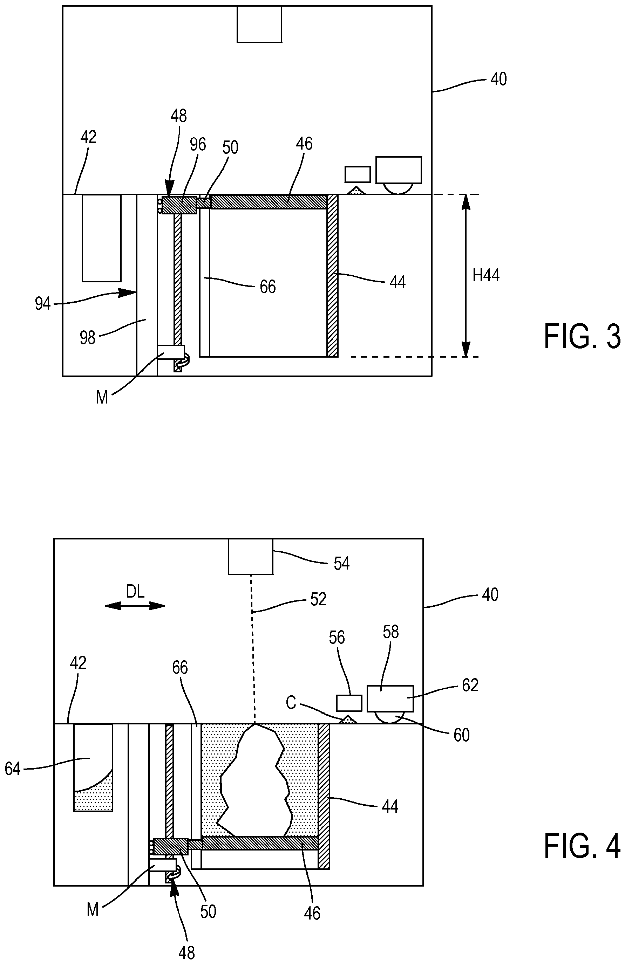

Pour la mise en œuvre d'une fabrication additive par dépôt de lit de poudre, la machine 40 de fabrication additive selon l'invention comprend un plan de travail 42, une chemise de fabrication 44 s'étendant depuis le plan de travail et sous le plan de travail, et un plateau de fabrication 46 se translatant entre une position haute, illustrée en figure 3, et une position basse, illustrée en figure 4, à l'intérieur de la chemise de fabrication sous l'effet d'un actionneur 48. Le plateau 46 est relié à l'actionneur 48 par un support 50.

Le plateau 46 permet de recevoir une superposition de différentes couches de poudre en descendant progressivement à l'intérieur de la chemise de fabrication sous l'effet de l'actionneur 48.

Pour la consolidation sélective des couches de poudre, la machine 40 comprend au moins un faisceau 52 émis par au moins une source 54. Un faisceau 52 est par exemple un faisceau laser émis par une source laser. En variante, plusieurs faisceaux 52 peuvent être émis par plusieurs sources laser comme par exemple des diodes laser. Toujours en variante, un faisceau 52 peut être un faisceau d'électrons émis par un canon à électrons. Un ou des faisceaux laser peuvent aussi être associés à un ou des faisceaux d'électrons. Afin de permettre une consolidation sélective d'une couche de poudre, c'est-à-dire selon des motifs et des trajectoires prédéterminés et correspondant à des sections des pièces à fabriquer, une source 54 est associée à des moyens de déplacement et de contrôle du ou des faisceaux 52. Par exemple, des miroirs, des lentilles optiques et/ou des actionneurs mécaniques permettent de déplacer et de modifier un ou des faisceaux laser, tandis que des bobines électromagnétiques permettent de déplacer et de contrôler un faisceau d'électron.

Le plan de travail 42 est horizontal. La chemise 44 s'étend verticalement sous le plan de travail 42, c'est-à-dire autour d'un axe vertical. La chemise 44 débouche par exemple dans le plan de travail 42 par une ouverture prévue dans le plan de travail.

Dans l'exemple illustré par les figures 3 et 4, le plan de travail 42 et la chemise 44 sont montés fixes, et le plateau de fabrication 46 se déplace en translation verticale dans la chemise 44 sous l'effet de l'actionneur 48.

Afin de réaliser les différentes couches de poudre utiles à la fabrication additive de la ou des pièces à fabriquer, la machine de fabrication additive 40 comprend un dispositif de distribution de poudre 56 permettant de déposer au moins un cordon de poudre C sur le plan de travail 42 et un dispositif d'étalement de poudre 58 permettant d'étaler le cordon de poudre déposé par le dispositif de distribution au-dessus du plateau 46.

Le dispositif de distribution de poudre 56 peut prendre la forme d'un injecteur mobile au-dessus du plan de travail 42 ou d'un tiroir associé à un doseur de poudre et coulissant dans une rainure prévue dans le plan de travail.

Le dispositif d'étalement 58 prend la forme d'une raclette ou d'un rouleau 60 monté sur un chariot 62. Ce chariot 62 est monté mobile en translation dans une direction horizontale longitudinale DL au-dessus du plan de travail 42.

La machine de fabrication additive 40 comprend aussi un réservoir 64 permettant de récupérer la poudre déposée en excès lors de la réalisation de chaque couche de poudre.

Pour fabriquer des pièces de révolution ou améliorer la résistance mécanique de la chemise de fabrication 44 au vide en vue d'une fabrication additive par faisceau d'électrons, la chemise de fabrication 44 peut prendre la forme d'un cylindre droit circulaire. La chemise de fabrication 44 peut aussi prendre la forme d'autres cylindres droits, à base polygonale, rectangulaire, carrée, elliptique, etc.

En parallèle d'un actionneur 48, la machine comprend un dispositif de guidage 94 en translation du plateau dans la chemise, le plateau étant relié à un dispositif de guidage 94 par un support 50. Un dispositif de guidage 94 comprend une navette 96 fixée au support 50 et montée sur un rail de guidage 98 vertical.

Selon l'invention, la chemise de fabrication 44 comprend une fente 66 dans sa hauteur H44 permettant au support 50 de traverser la chemise de fabrication pour relier le plateau 46 à l'actionneur 48 lorsque le plateau de fabrication se translate de sa position haute à sa position basse dans la chemise de fabrication. Une fente 66 permet aussi au support 50 de traverser la chemise de fabrication pour relier le plateau 46 à l'actionneur 48 lorsque le plateau de fabrication se translate de sa position basse à sa position haute dans la chemise de fabrication.

La chemise de fabrication 44 s'étendant verticalement sous le plan de travail 42, une fente 66 s'étend aussi verticalement. Par exemple, une fente 66 s'étend dans toute la hauteur H44 de la chemise de fabrication 44. Par exemple, une fente 66 s'étend rectilignement dans toute la hauteur H44 de la chemise de fabrication 44.

Pour donner un ordre de grandeur, la largeur d'une fente 66 est de quelques millimètres, alors que la hauteur H44 d'une chemise est de plusieurs dizaines de centimètres.

Avantageusement et comme le montrent les figures 3 et 4, la fente 66 permet de disposer un actionneur 48 à côté de la chemise de fabrication 44 et non en-dessous.

Afin de maintenir la poudre non consolidée dans la chemise au cours de la fabrication, un élément d'obturation 68 permet d'obturer une fente 66 de la chemise au fur et à mesure de la translation du plateau de sa position haute vers sa position basse dans la chemise. L'élément d'obturation 68 permet aussi d'obturer une fente 66 de la chemise au fur et à mesure de la translation du plateau de sa position basse vers sa position haute dans la chemise.

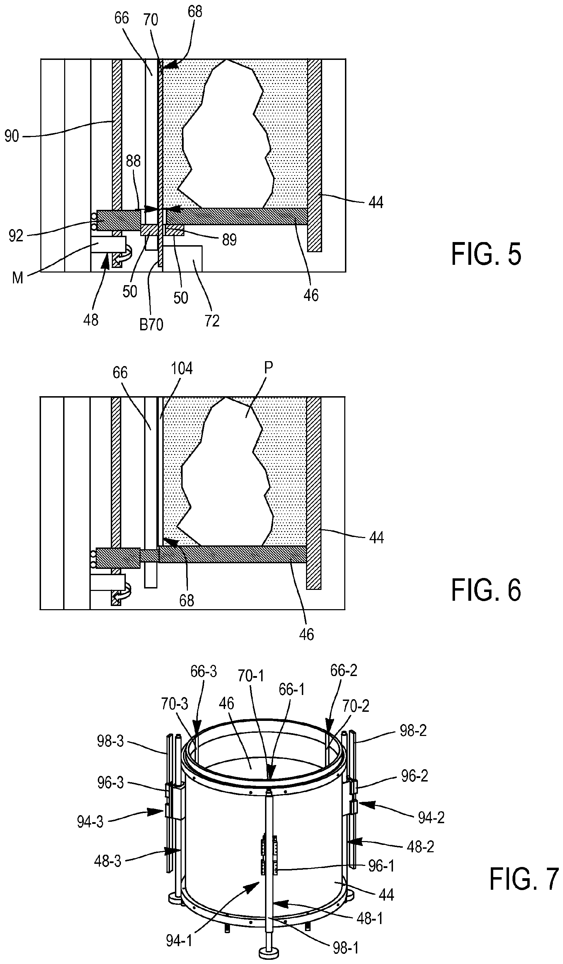

Comme l'illustrent les figures 5 et 6, un élément d'obturation 68 est par exemple un ruban 70. Par exemple, ce ruban 70 prend la forme d'un feuillard métallique. Alternativement, ce ruban 70 est en kevlar. Un ruban a par exemple une épaisseur de 0,5 millimètres et une largeur de 50 millimètres.

Afin d'obturer au mieux une fente 66, la largeur du ruban 70 est supérieure à la largeur de la fente. Par exemple, la largeur du ruban 70 est supérieure de 40 % à la largeur de la fente qu'il recouvre. Par exemple, pour une fente ayant une largeur de 35 millimètres, le ruban a une largeur de 50 millimètres.

L'extrémité supérieure U70 d'un ruban d'obturation est fixée, par exemple à l'aide de vis, au bord supérieur U44 de la chemise de fabrication ou au plan de travail 42.

Parallèlement, le ruban 70 est aussi plaqué contre la paroi intérieure 74 de la chemise de fabrication 44 par le plateau de fabrication 46.

Toujours pour obturer au mieux une fente 66 et éviter les fuites de poudre par une fente 66 au fur et à mesure que le plateau descend dans la chemise, l'extrémité inférieure B70 d'un ruban d'obturation est reliée à un dispositif de mise en tension 72 du ruban.

Un ruban 70 se situe entre la chemise de fabrication 44 et le plateau de fabrication 46, c'est-à-dire à l'intérieur de la chemise 44. Aussi, un dispositif de mise en tension 72 d'un ruban est disposé à l'intérieur de la chemise de fabrication 44 et sous le plateau de fabrication 46.

Afin de maintenir un ruban 70 en appui contre la paroi intérieure 74 de la chemise de fabrication 44, un dispositif de mise en tension 72 d'un ruban comprend au moins un ressort 76 reliant l'extrémité inférieure B70 du ruban à une partie fixe 78 de la machine et une lame ressort 80 en appui sur le ruban. Un ressort 76 est une pièce qui exerce un effort à partir de ses propriétés élastiques. Un ressort 76 peut être un ressort hélicoïdal, une lame, un vérin. Un ressort 76 applique un effort de mise en tension F1 sensiblement vertical et descendant sur un ruban 70 de manière à tendre le ruban dans sa longueur. La lame ressort 80 applique un effort de plaquage F2 sensiblement horizontal et dirigé vers la paroi intérieure 74 de la chemise de fabrication 44 de manière à plaquer le ruban 70 contre la paroi intérieure 74 de la chemise de fabrication 44.

Afin de répartir l'effort de tension sur le ruban, un dispositif de mise en tension 72 d'un ruban comprend plusieurs ressorts 76 reliant l'extrémité inférieure B70 du ruban à une partie fixe 78 de la machine, comme l'illustre la figure 6.

Afin de suivre les déplacements en translation du plateau 46 et d'appliquer son effort sur le ruban au plus près du plateau 46 quelle que soit la position du plateau dans la chemise 44, la lame ressort 80 est montée sur le support 50. Par exemple, l'extrémité supérieure U80 de la lame ressort 80 vient en appui sur le ruban 70 immédiatement en-dessous du plateau 46. L'extrémité supérieure U80 de la lame ressort 80 peut être équipé d'un patin 82 visant à limiter les frottements de la lame ressort sur le ruban.

Afin de maintenir l'extrémité inférieure B70 et le ou les ressorts 76 dans un même plan vertical quelle que soit la position du plateau et du support dans la chemise 44, un support 50 reliant le plateau 46 à un actionneur 48 comprend une butée 84 en contre-appui sur le ruban 70. Le contre-effort F3 exercé par la butée 84 d'un support sur un ruban s'oppose à l'effort de plaquage F2 exercé par la lame ressort 80 du dispositif de mise en tension sur ce ruban. Le contre-effort F3 est sensiblement horizontal et dirigé vers l'intérieur de la chemise de fabrication 44 de manière à éloigner le ruban 70 de la paroi intérieure 74 de la chemise de fabrication 44. La butée 84 peut être équipée d'un patin 86 visant à limiter les frottements de la butée 84 sur le ruban.

Comme l'extrémité supérieure U70 d'un ruban d'obturation est fixée au bord supérieur U44 de la chemise de fabrication et/ou au plan de travail 42 et que l'extrémité inférieure B70 d'un ruban est fixée à une partie fixe 78 de la machine sous le plateau 46, le ruban 70 doit passer entre le plateau 46 et la chemise de fabrication 44. Un jeu fonctionnel 88 entre le plateau et la chemise de fabrication 44 permet la translation du plateau dans la chemise sans blocage. Plus précisément, ce jeu fonctionnel 88 est prévu entre la périphérie du plateau et la paroi intérieure de la chemise. Ce jeu fonctionnel 88 peut être suffisant pour permettre le passage d'un ou plusieurs rubans 70 entre le plateau 46 et la chemise de fabrication 44. Dans le cas contraire, la valeur du jeu fonctionnel 88 peut être augmentée pour permettre le passage d'un ou plusieurs rubans 70 entre le plateau 46 et la chemise de fabrication 44. La valeur d'un jeu fonctionnel 88 permettant le passage d'un ou plusieurs rubans 70 est de 2 à 5 millimètres par exemple.

En alternative au jeu fonctionnel 88, il peut être prévu une rainure verticale en périphérie du plateau ou une rainure verticale dans la paroi intérieure de la chemise pour le passage d'un ruban entre la chemise et le plateau.

La figure 6 illustre comment le support 50 permet à la fois de soutenir le plateau de fabrication 46 tout en laissant passer le ruban 70 entre la chemise 44 et le plateau. A cet effet, l'extrémité inférieure B70 du ruban 70 est déportée vers le centre de la chemise 44. Grâce à ce déport de l'extrémité inférieure B70 du ruban 70 vers le centre de la chemise 44, le support peut pénétrer dans la chemise 44 et passer entre la paroi intérieure 74 de la chemise et le ruban 70 pour aller supporter le plateau 46.

Comme le montre la figure 7, un élément d'obturation 68 peut aussi prendre la forme d'une paroi de recouvrement 104 fabriquée au fur et à mesure de la translation du plateau dans la chemise de fabrication. Plus précisément, la paroi de recouvrement 104 est constituée par une certaine quantité de poudre consolidée, c'est-à-dire frittée ou fusionnée, en face d'une fente 66. La paroi de recouvrement 104 est fabriquée additivement en même temps qu'une pièce P est fabriquée sur le plateau 46. La paroi de recouvrement 104 a par exemple une épaisseur de quelques millimètres et une largeur de 50 millimètres. Afin d'obturer au mieux une fente 66, la largeur de la paroi de recouvrement 104 est supérieure à la largeur de la fente. Par exemple, la largeur de la paroi de recouvrement 104 est supérieure de 40 % à la largeur de la fente qu'elle recouvre. Par exemple, pour une fente ayant une largeur de 35 millimètres, la paroi de recouvrement 104 a une largeur de 50 millimètres.

Un élément d'obturation 68 peut aussi comprendre à la fois un ruban 70 et une paroi de recouvrement 104. Dans ce cas, le ruban 70 est en contact avec la paroi intérieure de la chemise et la paroi 104 recouvre le ruban 70.

Comme le montrent les différentes figures, et comme une fente 66 permet à un support 50 de traverser la chemise 46 dans toute sa hauteur, un actionneur 48 entraînant le plateau 46 en translation à l'intérieur de la chemise de fabrication 44 est disposé à l'extérieur de la chemise de fabrication. Par exemple, un actionneur 48 est disposé parallèlement à la chemise de fabrication et à l'extérieur de celle-ci.

Afin de limiter la hauteur du plan de travail 42 et l'encombrement global de la machine, un actionneur 48 entraînant le plateau en translation à l'intérieur de la chemise de fabrication via un support 50, cet actionneur s'étend au-dessus de ce support 50 lorsque le plateau 46 est dans sa position basse dans la chemise de fabrication.

Toujours afin de limiter la hauteur du plan de travail 42 et l'encombrement global de la machine, un actionneur 48 entraînant le plateau en translation à l'intérieur de la chemise de fabrication s'étend sous le plan de travail 42.

Plus précisément, un actionneur 48 entraînant le plateau en translation à l'intérieur de la chemise de fabrication via un support 50, cet actionneur 48 s'étend en-dessous de ce support 50 lorsque le plateau est dans sa position haute dans la chemise de fabrication.

Pour respecter les contraintes d'encombrement précitées, un actionneur prend par exemple la forme d'un axe fileté 90 et entraîné en rotation par un moteur M, le support 50 comprenant un écrou 92 vissé sur l'axe fileté. Un actionneur 48 peut aussi prendre la forme d'une vis à bille entraînée en rotation par un moteur M ou d'un ensemble pignon-crémaillère avec un pignon entraîné en rotation par un moteur.

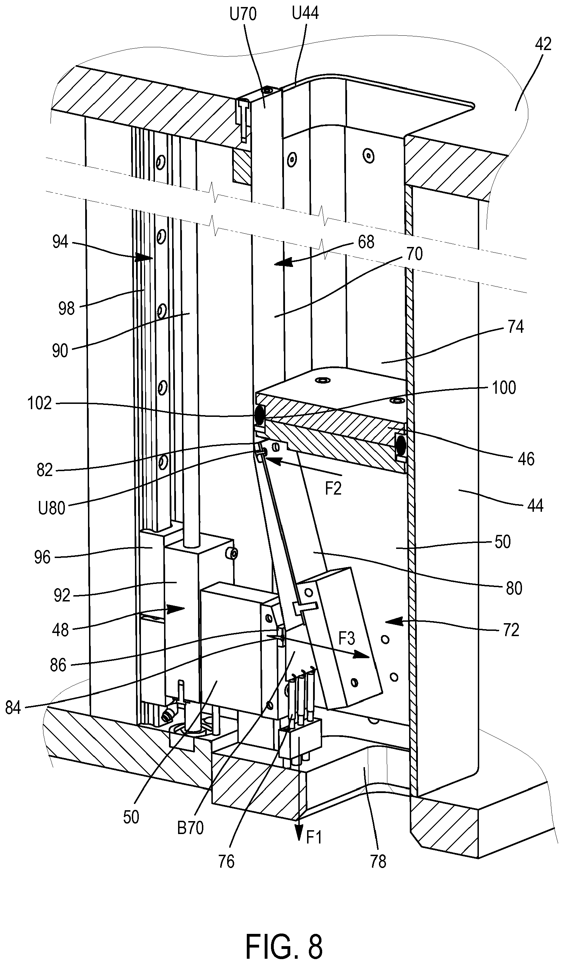

Afin d'éviter un montage en porte-à-faux avec un seul support et un seul actionneur, notamment dans le cas d'une chemise et d'un plateau de grandes dimensions, le plateau de fabrication 46 se translate entre sa position haute et sa position basse à l'intérieur de la chemise de fabrication 44 sous l'effet de plusieurs actionneurs 48-1,48-2,48-3, le plateau de fabrication 46 étant relié à chaque actionneur par un support 50. Comme le montre la figure 8, la chemise de fabrication 44 comprend plusieurs fentes 66-1,66-2,66-3 dans sa hauteur H44 permettant à un support 50 de traverser la chemise de fabrication pour relier le plateau de fabrication à chaque actionneur 48-1,48-2,48-3 lorsque le plateau de fabrication se translate de sa position haute à sa position basse dans la chemise de fabrication, et lorsque le plateau de fabrication se translate de sa position basse à sa position haute dans la chemise de fabrication.

Dans le cas où la chemise de fabrication 44 comprend plusieurs fentes 66-1,66-2,66-3, la machine comprend plusieurs rubans d'obturation 70-1,70-2,70-3 permettant d'obturer chaque fente 66-1,66-2,66-3 de la chemise au fur et à mesure de la translation du plateau de sa position haute vers sa position basse dans la chemise, et au fur et à mesure de la translation du plateau de sa position basse vers sa position haute dans la chemise.

Comme dans l'exemple illustré en figure 8, le plateau 46 se translate entre sa position haute et sa position basse à l'intérieur de la chemise de fabrication 44 sous l'effet de trois actionneurs 48-1,48-2,48-3 répartis régulièrement, et donc chacun à 120 degrés des deux autres, autour de la chemise de fabrication.

Parallèlement aux trois actionneurs 48-1,48-2,48-3, la machine comprend trois dispositifs de guidage 94-1,94-2,94-3 en translation du support et donc du plateau. Chaque dispositif de guidage 94-1,94-2,94-3 comprend une navette 96-1,96-2,96-3 fixée au support 50 et montée sur un rail de guidage 98-1,98-2,98-3 vertical.

Comme le montre la figure 6, un plateau 46 comprend un logement périphérique 100 pour au moins un joint d'étanchéité 102 à la poudre. Un joint d'étanchéité 102 prend par exemple la forme d'une tresse métallique ou céramique. Ce joint d'étanchéité 102 compense la surépaisseur générée par un ou plusieurs rubans 70 entre le plateau et la chemise et il permet d'empêcher un écoulement de poudre entre le plateau et la chemise dû au jeu fonctionnel 88.

Dans la présente invention, le ou les actionneurs sont dissociés du ou des dispositifs de guidage car les actionneurs doivent supporter des charges très importantes en fin de fabrication, notamment dans le cas de la fabrication additive de pièces de grande hauteur, et un guidage très précis, de l'ordre de quelques micromètres, du plateau est nécessaire pour réaliser des couches de poudre de quelques dizaines de micromètres d'épaisseur et d'épaisseur constante.

## Revendications

1. Machine (40) de fabrication additive par dépôt de lit de poudre, cette machine de fabrication additive comprenant un plan de travail (42), une chemise de fabrication (44) s'étendant depuis le plan de travail et sous le plan de travail, et un plateau de fabrication (46) se translatant entre une position haute et une position basse à l'intérieur de la chemise de fabrication sous l'effet d'un actionneur (48), le plateau étant relié à l'actionneur par un support (50), la chemise de fabrication (44) comprenant une fente (66) dans sa hauteur (H44) permettant au support (50) de traverser la chemise de fabrication pour relier le plateau à l'actionneur lorsque le plateau de fabrication se translate de sa position haute à sa position basse dans la chemise de fabrication, un élément d'obturation (68) permettant d'obturer une fente (66) de la chemise au fur et à mesure de la translation du plateau de sa position haute vers sa position basse dans la chemise, un élément d'obturation (68) étant un ruban (70), la machine de fabrication additive est **caractérisée en ce que** l'extrémité supérieure (U70) d'un ruban d'obturation est fixée au bord supérieur (U44) de la chemise de fabrication ou au plan de travail (42).

2. Machine (40) de fabrication additive par dépôt de lit de poudre selon la revendication 1, dans laquelle l'extrémité inférieure (B70) d'un ruban d'obturation est reliée à un dispositif de mise en tension (72) du ruban.

3. Machine (40) de fabrication additive par dépôt de lit de poudre selon la revendication 2, dans laquelle un dispositif de mise en tension (72) d'un ruban est disposé à l'intérieur de la chemise de fabrication (44) et sous le plateau de fabrication (46).

4. Machine (40) de fabrication additive par dépôt de lit de poudre selon l'une des revendications 2 ou 3, dans laquelle un dispositif de mise en tension (72) d'un ruban comprend au moins un ressort (76) reliant l'extrémité inférieure (U70) du ruban à une partie fixe (78) de la machine et une lame ressort (80) en appui sur le ruban.

5. Machine (40) de fabrication additive par dépôt de lit de poudre selon la revendication 4, dans laquelle un support (50) reliant le plateau (46) à un actionneur (48) comprend une butée (84) en contre-appui sur le ruban (70), le contre-effort (F3) exercé par la butée (84) d'un support sur un ruban s'oppose à l'effort de plaquage (F2) exercé par la lame ressort (80) du dispositif de mise en tension sur ce ruban.

6. Machine (40) de fabrication additive par dépôt de lit de poudre selon l'une des revendications 1 à 5, dans laquelle un jeu fonctionnel (88) est prévu entre le plateau et la chemise de fabrication (44) pour le passage d'un ruban entre le plateau et la chemise de fabrication.

7. Machine (40) de fabrication additive par dépôt de lit de poudre selon l'une des revendications 1 à 6, dans laquelle un ruban (70) prend la forme d'un feuillard métallique.

8. Machine (40) de fabrication additive par dépôt de lit de poudre selon l'une des revendications précédentes, dans laquelle un élément d'obturation (68) comprend aussi une paroi de recouvrement (104) fabriquée au fur et à mesure de la translation du plateau dans la chemise de fabrication.

9. Machine (40) de fabrication additive par dépôt de lit de poudre selon l'une des revendications précédentes, dans laquelle un actionneur (48) entraînant le plateau en translation à l'intérieur de la chemise de fabrication est disposé à l'extérieur de la chemise de fabrication (44).

10. Machine (40) de fabrication additive par dépôt de lit de poudre selon l'une des revendications précédentes, dans laquelle, un actionneur (48) entraînant le plateau en translation à l'intérieur de la chemise de fabrication via un support (50), cet actionneur s'étend au-dessus de ce support (50) lorsque le plateau est dans sa position basse dans la chemise de fabrication.

11. Machine (40) de fabrication additive par dépôt de lit de poudre selon la revendication 10, dans laquelle un actionneur (48) entraînant le plateau en translation à l'intérieur de la chemise de fabrication s'étend sous le plan de travail.

12. Machine (40) de fabrication additive par dépôt de lit de poudre selon la revendication 11, dans laquelle un actionneur (48) entraînant le plateau en translation à l'intérieur de la chemise de fabrication via un support (50), cet actionneur s'étend en-dessous de ce support lorsque le plateau est dans sa position haute dans la chemise de fabrication.

13. Machine (40) de fabrication additive par dépôt de lit de poudre selon l'une des revendications précédentes, dans laquelle un actionneur prend la forme d'un axe fileté (90) et entraîné en rotation par un moteur, le support comprenant un écrou (92) vissé sur l'axe fileté.

14. Machine (40) de fabrication additive par dépôt de lit de poudre selon l'une des revendications précédentes, dans laquelle le plateau de fabrication (46) se translate entre sa position haute et sa position basse à l'intérieur de la chemise de fabrication (44) sous l'effet de plusieurs actionneurs (48-1,48-2,48-3), le plateau étant relié à chaque actionneur par un support (50), et dans laquelle la chemise de fabrication comprend plusieurs fentes (66-1,66-2,66-3) dans sa hauteur permettant à un support (50) de traverser la chemise de fabrication pour relier le plateau de fabrication à chaque actionneur (48-1,48-2,48-3) lorsque le plateau de fabrication se translate de sa position haute à sa position basse dans la chemise de fabrication.

15. Machine (40) de fabrication additive par dépôt de lit de poudre selon la revendication 14, dans laquelle le plateau de fabrication se translate entre sa position haute et sa position basse à l'intérieur de la chemise de fabrication sous l'effet de trois actionneurs (48-1,48-2,48-3) répartis régulièrement autour de la chemise de fabrication.

## Patentansprüche

1. Maschine (40) zur generativen Fertigung durch Aufbringen eines Pulverbetts, wobei diese Maschine zur generativen Fertigung eine Arbeitsebene (42), einen Fertigungsmantel (44), der sich von der Arbeitsebene aus und unter der Arbeitsebene erstreckt, und eine Fertigungsplatte (46), die sich zwischen einer oberen Stellung und einer unteren Stellung im Inneren des Fertigungsmantels unter der Einwirkung eines Aktors (48) translatorisch bewegt, umfasst, wobei die Platte mit dem Aktor durch einen Träger (50) verbunden ist, wobei der Fertigungsmantel (44) einen Schlitz (66) in seiner Höhe (H44) umfasst, der es dem Träger (50) ermöglicht, den Fertigungsmantel zu durchdringen, um die Platte mit dem Aktor zu verbinden, wenn sich die Fertigungsplatte in dem Fertigungsmantel translatorisch von ihrer oberen Stellung in ihre untere Stellung bewegt, wobei ein Verschlusselement (68) es ermöglicht, einen Schlitz (66) des Mantels im Zuge der translatorischen Bewegung der Platte von ihrer oberen Stellung zu ihrer unteren Stellung in dem Mantel zu verschließen, wobei ein Verschlusselement (68) ein Band (70) ist, wobei die Maschine zur generativen Fertigung **dadurch gekennzeichnet ist, dass** das obere Ende (U70) eines Verschlussbands am oberen Rand (U44) des Fertigungsmantels oder an der Arbeitsebene (42) befestigt ist.

2. Maschine (40) zur generativen Fertigung durch Aufbringen eines Pulverbetts nach Anspruch 1, bei der das untere Ende (B70) eines Verschlussbands mit einer Spannvorrichtung (72) für das Band verbunden ist.

3. Maschine (40) zur generativen Fertigung durch Aufbringen eines Pulverbetts nach Anspruch 2, bei der eine Spannvorrichtung (72) für das Band im Inneren des Fertigungsmantels (44) und unter der Fertigungsplatte (46) angeordnet ist.

4. Maschine (40) zur generativen Fertigung durch Aufbringen eines Pulverbetts nach einem der Ansprüche 2 oder 3, bei der eine Spannvorrichtung (72) für ein Band mindestens eine Feder (76), die das untere Ende (U70) des Bands mit einem feststehenden Teil (78) der Maschine verbindet, und eine am Band anliegende Blattfeder (80) umfasst.

5. Maschine (40) zur generativen Fertigung durch Aufbringen eines Pulverbetts nach Anspruch 4, bei der ein Träger (50), der die Platte (46) mit einem Aktor (48) verbindet, einen Anschlag (84) in Gegenanlage an dem Band (70) umfasst, wobei die von dem Anschlag (84) eines Trägers auf ein Band ausgeübte Gegenkraft (F3) der Anpresskraft (F2) entgegenwirkt, die von der Blattfeder (80) der Spannvorrichtung auf dieses Band ausgeübt wird.

6. Maschine (40) zur generativen Fertigung durch Aufbringen eines Pulverbetts nach einem der Ansprüche 1 bis 5, bei der ein funktionelles Spiel (88) zwischen der Platte und dem Fertigungsmantel (44) zum Durchführen eines Bands zwischen der Platte und dem Fertigungsmantel vorgesehen ist.

7. Maschine (40) zur generativen Fertigung durch Aufbringen eines Pulverbetts nach einem der Ansprüche 1 bis 6, bei der ein Band (70) die Form eines Metallbands annimmt.

8. Maschine (40) zur generativen Fertigung durch Aufbringen eines Pulverbetts nach einem der vorhergehenden Ansprüche, bei der ein Verschlusselement (68) auch eine Abdeckwand (104) umfasst, die im Zuge der translatorischen Bewegung der Platte in dem Fertigungsmantel gefertigt wird.

9. Maschine (40) zur generativen Fertigung durch Aufbringen eines Pulverbetts nach einem der vorhergehenden Ansprüche, bei der ein Aktor (48), der die Platte translatorisch im Inneren des Fertigungsmantels antreibt, außerhalb des Fertigungsmantels (44) angeordnet ist.

10. Maschine (40) zur generativen Fertigung durch Aufbringen eines Pulverbetts nach einem der vorhergehenden Ansprüche, bei der, wenn ein Aktor (48) die Platte translatorisch im Inneren des Fertigungsmantels über einen Träger (50) antreibt, dieser Aktor sich oberhalb dieses Trägers (50) erstreckt, wenn die Platte in ihrer unteren Stellung in dem Fertigungsmantel ist.

11. Maschine (40) zur generativen Fertigung durch Aufbringen eines Pulverbetts nach Anspruch 10, bei der ein Aktor (48), der die Platte translatorisch im Inneren des Fertigungsmantels antreibt, sich unter der Arbeitsebene erstreckt.

12. Maschine (40) zur generativen Fertigung durch Aufbringen eines Pulverbetts nach Anspruch 11, bei der, wenn ein Aktor (48) die Platte translatorisch im Inneren des Fertigungsmantels über einen Träger (50) antreibt, dieser Aktor sich unterhalb dieses Trägers erstreckt, wenn die Platte in ihrer oberen Stellung in dem Fertigungsmantel ist.

13. Maschine (40) zur generativen Fertigung durch Aufbringen eines Pulverbetts nach einem der vorhergehenden Ansprüche, bei der ein Aktor die Form einer mit einem Gewinde versehenen und von einem Motor drehangetriebenen Achse (90) annimmt, wobei der Träger eine Mutter (92) umfasst, die auf die Gewindeachse geschraubt ist.

14. Maschine (40) zur generativen Fertigung durch Aufbringen eines Pulverbetts nach einem der vorhergehenden Ansprüche, bei der sich die Fertigungsplatte (46) translatorisch zwischen ihrer oberen Stellung und ihrer unteren Stellung im Inneren des Fertigungsmantels (44) unter der Einwirkung mehrerer Aktoren (48-1, 48-2, 48-3) bewegt, wobei die Platte mit jedem Aktor durch einen Träger (50) verbunden ist, und bei der der Fertigungsmantel mehrere Schlitze (66-1, 66-2, 66-3) in seiner Höhe umfasst, die es einem Träger (50) ermöglichen, den Fertigungsmantel zu durchdringen, um die Fertigungsplatte mit jedem Aktor (48-1, 48-2, 48-3) zu verbinden, wenn sich die Fertigungsplatte translatorisch von ihrer oberen Stellung in ihre untere Stellung in dem Fertigungsmantel bewegt.

15. Maschine (40) zur generativen Fertigung durch Aufbringen eines Pulverbetts nach Anspruch 14, bei der sich die Fertigungsplatte translatorisch zwischen ihrer oberen und ihrer unteren Stellung im Inneren des Fertigungsmantels unter der Einwirkung von drei Aktoren (48-1, 48-2, 48-3) bewegt, die gleichmäßig um den Fertigungsmantel herum verteilt sind.

## Claims

1. Powder bed fusion additive manufacturing machine (40), this additive manufacturing machine comprising a work surface (42), a build sleeve (44) extending from the work surface and below the work surface, and a build platform (46) moving translationally between a raised position and a lowered position inside the build sleeve under the effect of an actuator (48), the platform being connected to the actuator by a support (50), the build sleeve (44) comprising a slot (66) in its height (H44) allowing the support (50) to pass through the build sleeve to connect the platform to the actuator when the build platform translates from its raised position to its lowered position in the build sleeve, a closing-off element (68) allowing a slot (66) in the sleeve to be closed off progressively as the platform effects its translational movement inside the sleeve from its raised position to its lowered position, a closing-off element (68) being a tape (70), the additive manufacturing machine being **characterized in that** the upper end (U70) of a closing-off tape is fixed to the upper edge (U44) of the build sleeve or to the work surface (42).

2. Powder bed fusion additive manufacturing machine (40) according to Claim 1, wherein the bottom end (B70) of a closing-off tape is connected to a tape tensioning device (72).

3. Powder bed fusion additive manufacturing machine (40) according to Claim 2, wherein a tape tensioning device (72) is positioned inside the build sleeve (44) and beneath the build platform (46).

4. Powder bed fusion additive manufacturing machine (40) according to one of Claims 2 and 3, wherein a tape tensioning device (72) comprises at least a spring (76) connecting the bottom end (B70) of the tape to a fixed part (78) of the machine, and a leaf spring (80) pressing against the tape.

5. Powder bed fusion additive manufacturing machine (40) according to Claim 4, wherein a support (50) connecting the platform (46) to an actuator (48) comprises an end-stop (84) countering the force on the tape (70), the counteracting force (F3) exerted by the end-stop (84) of a support on a tape opposes the pressing force (F2) exerted by the leaf spring (80) of the tensioning device pressing against this tape.

6. Powder bed fusion additive manufacturing machine (40) according to one of Claims 1 to 5, wherein a functional clearance (88) is provided between the build sleeve (44) and platform so that a tape can pass between the build sleeve and platform.

7. Powder bed fusion additive manufacturing machine (40) according to one of Claims 1 to 6, wherein a tape (70) adopts the form of a length of metal strip.

8. Powder bed fusion additive manufacturing machine (40) according to one of the preceding claims, wherein a closing-off element (68) also comprises a covering wall (104) manufactured as the platform progressively effects its translational movement in the build sleeve.

9. Powder bed fusion additive manufacturing machine (40) according to one of the preceding claims, wherein an actuator (48) driving the platform in translational movement inside the build sleeve is positioned outside the build sleeve (44).

10. Powder bed fusion additive manufacturing machine (40) according to one of the preceding claims, wherein, with an actuator (48) driving the platform in translational movement inside the build sleeve via a support (50), this actuator extends above this support (50) when the platform is in its lowered position inside the build sleeve.

11. Powder bed fusion additive manufacturing machine (40) according to Claim 10, wherein an actuator (48) driving the platform in translational movement inside the build sleeve extends below the work surface.

12. Powder bed fusion additive manufacturing machine (40) according to Claim 11, wherein, with an actuator (48) driving the platform in translational movement inside the build sleeve via a support (50), this actuator extends below this support when the platform is in its raised position inside the build sleeve.

13. Powder bed fusion additive manufacturing machine (40) according to one of the preceding claims, wherein an actuator adopts the form of a threaded spindle (90) driven in rotation by a motor, the support comprising a nut (92) screwed onto the threaded spindle.

14. Powder bed fusion additive manufacturing machine (40) according to one of the preceding claims, wherein the build platform (46) moves translationally between its raised position and its lowered position inside the build sleeve (44) under the effect of several actuators (48-1,48-2,48-3), the platform being connected to each actuator by a support (50), and wherein the build sleeve comprises several slots (66-1,66-2,66-3) in its height, allowing a support (50) to pass through the build sleeve to connect the build platform to each actuator (48-1,48-2,48-3) as the build platform effects its translational movement from its raised position to its lowered position in the build sleeve.

15. Powder bed fusion additive manufacturing machine (40) according to Claim 14, wherein the build platform effects a translational movement between its raised position and its lowered position inside the build sleeve under the effect of three actuators (48-1,48-2,48-3) uniformly distributed around the build sleeve.
